# EUROPEAN PATENT SPECIFICATION

(11) **EP 2 184 895 B1**
(45) Date of publication and mention of the grant of the patent: **16.03.2011**
(21) Application number: 08291036.5
(22) Date of filing: 06.11.2008
(51) Int. Cl.: H04L 12/56, H04L 12/24, H04L 29/06, H04L 29/08

(54) **Secure distributed network resource management**
Sicheres verteiltes Netzressourcenmanagement
Gestion de ressource de réseau distribué sécurisé

(43) Date of publication of application: 12.05.2010
(73) Proprietor: Alcatel Lucent, 75008 Paris (FR)
(72) Inventor: Kisel, Andrey, Maidenhead Wiltshire SL6 8DH (GB); Cristallo, Geoffrey, 1080 Molenbeek (BE); Robinson, David Cecil, Aldbourne Wiltshire SN8 2NP (GB)
(74) Representative: Sarup, David Alexander

(56) References cited:
- WO-A-2006/118501
- US-A1- 2001 044 893
- US-A1- 2002 133 600
- "Telecommunications and Internet converged Services and Protocols for Advanced Networking (TISPAN); Dedicated IPTV subsystem stage 3 specification" ETSI STANDARDS, LIS, SOPHIA ANTIPOLIS CEDEX, FRANCE, vol. 183 064 (tispan), no. V2.1.1, 31 October 2008 (2008-10-31), pages 1-46, XP002516523 ISSN: 0000-0001
- "Telecommunications and Internet converged Services and Protocols for Advanced Networking (TISPAN); IPTV Architecture; Dedicated subsystem for IPTV functions; ETSI TS 182 028" ETSI STANDARDS, LIS, SOPHIA ANTIPOLIS CEDEX, FRANCE, vol. TISPAN, no. V2.0.0, 1 January 2008 (2008-01-01), XP014040792 ISSN: 0000-0001
- "Telecommunications and Internet converged Services and Protocols for Advanced Networking (TISPAN); NGN Security; Security Architecture; ETSI TS 187 003" ETSI STANDARDS, LIS, SOPHIA ANTIPOLIS CEDEX, FRANCE, vol. TISPAN, no. V1.7.1, 1 February 2008 (2008-02-01), XP014040807 ISSN: 0000-0001

## Description

### Background of the Invention

The present invention relates to secure distributed network resource management. In particular, but not exclusively, it relates to so-called next generation networks (NGN).

### Description of the Prior Art

Next generation networks (NGN) rely on Resource reservation and Admission Control Sub-systems (RACS) to reserve and guarantee quality of service (QoS). Several Standard Bodies have addressed RAC (Resource Admission Control) sub-system architecture.

The International Telecoms Union (ITU-SGI) and the Alliance for Telecommunications Industry Standards (ATIS) have both specified the use of an entity known as a Resource Access Control Facility (RAC-F).

The European Telecommunications Standards Institute (ETSI) have specified the use of a Resource and Admission Control Sub-system (RACS).

ETSI TISPAN defined RACS architecture in ETSI ES 282 003: "Telecommunications and Internet converged Services and Protocols for Advanced Networking (TISPAN); Resource and Admission Control Sub-system (RACS): Functional Architecture". ETSI ES 282 003 specifies how other NGN subsystems (i.e. applications or service functions) should interact with RACS for authorization and resource reservation. An interaction with the applications can, for example, utilize a reference point called Gq' via a Diameter protocol. However, it is assumed in ETSI ES 282 003 that the same functional entity will reserve, modify, refresh and release resources via the Gq' interface. Accordingly, the same managing functional entity, eg IPTV control in an IPTV subsystem, is required to maintain track of sessions so that the resources can be released after use.

Considering an IPTV (Internet Protocol Television) example, a CoD (Content on Demand) server typically delivers IPTV CoD service, whilst it is an IPTV Control node which assumes the broker role for the resource management. Thus a single functional entity, the IPTV Control, is responsible for resource management and must maintain track of all QoS resources for the duration of all CoD sessions.

This approach has limitations, because the functional entity (IPTV-C) which is used to reserve, modify, refresh and release resources is not the same as the functional entity actually delivering the service. Therefore the requesting and releasing entity needs to keep track of another entity's state in order to release the resources during normal or abnormal session termination, eg during a CoD or broadcast TV (bTV) session.

Similar considerations apply for IMS (IP Multimedia Subsystem) based IPTV subsystems where Proxy Call Session Control Function (P-CSCF) manages resources instead of IPTV Control.

An alternative approach has been described in ETSI TS 183 064 : "Telecommunications and Internet Converged Services and Protocols for Advanced Networking (TISPAN): Dedicated IPTV subsystem Stage 3 Specification", in which resource release is delegated to another functional entity called the MCF (Media Control Functions) after the IPTV control has reserved them.

However, this approach requires distributed access to the network management interface, potentially from opened networks, which creates security risks. The term distributed access means access from multiple network locations.

A prior art method and apparatus for establishing a protocol proxy for a mobile host terminal in a multimedia session is known from US 2002/0133600. A prior art method, system and bandwidth manager for preventing overbooking of resources in a data network is known from WO 2006/118501.

### Brief Summary of the Invention

The present invention arose in an attempt to provide a secure distributed resource management system.

According to the present invention, there is provided a data network as recited in Claim 1.

During the QoS session, resources are reserved for the delivery of the content.

The control server and the resource allocation server are preferably connected via a Gq' interface, the authentication token being used on said Gq' interface. The Gq' reference point allows the control server (eg IPTV control server) to request resources from the resource and admission control server, as defined in ETSI TS 182 019 Resource and Admission Control Sub-system (RACS).

The control server and the resource allocation service are connected via a Gq' interface when the network architecture is the ETSI architecture (discussed above). When another architecture is implemented, a different interface will be implemented.

The network may be arranged such that the control server is arranged to request a token only when distributed management is requested.

The token provides authentication and security to a session. It also helps protect against Denial of Service (DoS) attacks, particularly for a RACS server.

The token may be used for operations such as, but not limited to, releasing/refreshing resources, sending 'heart beats' indicating availability or indicating ongoing sessions.
In the case of a CoD server, the CoD server may provide IPTV content to one or more UE (user equipment) devices, which may comprise set-top boxes plus displays (TV sets or similar), for example, or integrated devices.

According to the present invention in a further aspect, there is provided a method of managing resources on a network as recited in Claim 4.

The control server may separately request a token only when distributed management is requested.

The QoS session ID may be passed onto the service function with the token.

In essence, in embodiments of the invention, an authentication token is introduced between a control server, resource allocation server and service function on a network.

The invention also provides a data network or method including any one or more of the novel features, combinations of features, steps or combination of steps disclosed herein.

### Description of the Drawings

Embodiments of the invention will now be described, by way of example only, with reference to the accompanying schematic drawing, in which:

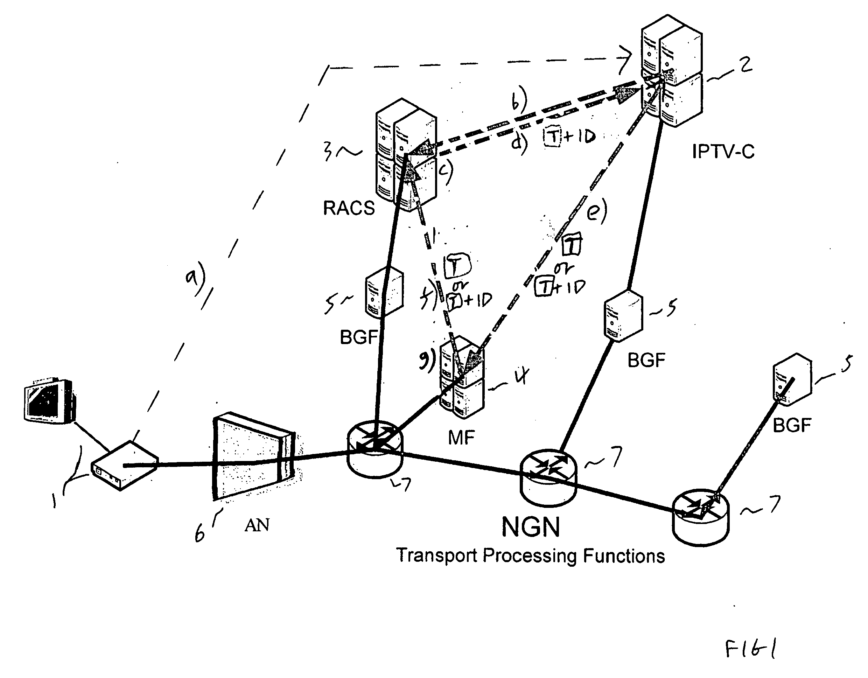

Figure 1 shows schematically a network.

### Detailed Description of the Embodiment of Invention

Referring to Figure 1, an embodiment of the invention is shown schematically. A UE 1, in this case a IPTV UE (set-top box plus TV set for example) is connected to a next generation network via an Access Node (AN) 6, typically a DSLAM (Digital Subscriber Line Access Multiplexer). Whilst only a single UE 1 is shown for clarity, it should be appreciated that there will generally be a large number of UEs 1 connected to the network, with network resources shared between the UEs 1, each AN being connected to a number of UEs.

The network is a NGN (next generation network) which comprises an IPTV-C (IPTV control) 2 (eg as described in ETSI TS 182028), a RACS (resource and admission control server) 3, a MF (media function) 4, in this case a CoD server for interactive media delivery, BGF (border gateway function) devices 5, and access nodes (such as AN 6). The MF represents a service function, i.e. a network element/subsystem which can be selected to manage allocated network resources and to deliver content to user equipment using the allocated network resources. A number of network elements 7 performing various functions are also shown. These network elements may, for example, perform network routing.

In alternative embodiments, instead of IPTV-C, IMS core may be used, as defined in the ETSI specifications. The network configuration is dependent upon the specification being implemented. It will be readily appreciated by the skilled person that numerous network arrangements are possible within the scope of the present invention.

Operation of the network will now be considered, with reference to the figure. The dashed lines in the figure represent flow of commands, etc and are not representative of real 'connections' just the command/operation/signal flow. In particular, these signals will take many different pathways or routes. The content transmitted over the network may be streaming or downloadable video content, data or many other types of content.
a) A user selects on-demand content, eg a movie, and instructs the UE that he wishes to start watching. The UE sends a request to the IPTV-C to initiate a CoD session.
b) The IPTV-C selects MF (CoD server) for content delivery and, during or after the selection, requests resource reservation from the RACS. Sufficient network resources (bandwidth) are reserved to guarantee QoS. In the present embodiment, in which the ETSI TISPAN NGN model is used, the resource reservation request is made on a Gq' interface between the IPTV-C and the RACS). The Gq' reference point is extended with an indication that distributed management is required. This indication is a flag attached to the request, which is set when distributed resource management is required.

It will be readily appreciated that many MF may be available for selection, however, for clarity, only a single MF is shown in Figure 1.
c) The RACS creates a QoS Session and, since distributed management is required, assigns an authorization token T to it. The RACS maintains the association between the QoS session ID and the corresponding token. A token is only assigned when distributed management is required. The token in the present embodiment, is an X-bytes digital sequence, however, alternative tokens will be readily appreciated by the skilled person. It is not necessary to append the token to each packet. The token can be returned to IPTV-C in response to the resource reservation request (as discussed in step (d) below).
d) The token is passed from the RACS to the IPTV-C with a resource confirmation ID.

The IPTV-C instructs the UE to establish a session with the selected MF after ' receipt of the resource confirmation ID from RACS.

The IPTV-C may instruct the UE to start the QoS session with the nominated MF (CoD server), and may supply the UE with the resource confirmation ID for the QoS session, in which case the UE can supply the resource confirmation ID to the MF when initiating the service for resource management.
e) The token is then securely passed by the IPTV-C to other NGN functions. These may include control servers, application servers or similar, such elements being referred to broadly as service functions. In the present case, the token is passed to the MF 4 for distributed resource management. It should be noted that the token may be retrieved from the IPTV-C or the RAC-S by the MF. The MF uses the QoS session ID and the authorization token to authenticate the resource release request, or any modification request. In the simplest arrangement only the token T is passed to the MF by the IPTV-C. In alternative arrangements, however, the token and the session ID are passed to the MF.

The control server does not pass the associated token to the UE. Any malicious attempts to intercept and use the QoS session ID to modify the QoS session with the RACS will be denied by the RACS without the token.

In arrangements in which both the token and the session ID are passed to the MF, the UE supplies the QoS session ID to MF, to identify the resources which have been reserved for CoD session, after it establishes the CoD session with the MF. The MF then looks-up the token associated with the supplied QoS session ID and uses it for secure resource management.
f) The RACS validates the association between the Session ID and the authorization token, and permits the MF to perform management actions or to close the QoS session when the user finishes watching content, the movie in the present example, at the UE, even though the MF has not created the session.
g) The MF 4 knows the state of the content delivery and when the content delivery is no longer required. It accordingly knows when reserved resources (QoS session) are no longer required. Thus after the CoD session is finished, the MF can use the token to ask RACS to release the QoS session directly, without involving IPTV-C.

In any case, upon termination of the QoS session, the resources are released for use in other sessions.

Other uses of the token will be apparent.

Thus in the present invention an authentication token is introduced on the Gq' interface, or similar (depending on the NGN specification implemented), when distributed management is required. The token may be applicable to operations including, but not limited to, refreshing resources, sending 'heart-beat' or performing resource release. The token may be applied to all management operations or to some only. For example, the token may be applied to resource release only, or to alter resource reservation as well as releasing resources.

The invention enables secure distributed resource management, providing, among other benefits, denial of service (DoS) protection for RACS servers, when RACS is opened for distributed management.

Whilst the present invention has been defined in terms of IPTV, it should be noted that the present invention is applicable to distributed resource management for any type of multimedia content in next generation networks.

## Claims

1. A data network, comprising a control server (2) and a resource allocation server (3), which is arranged to manage network resources, **characterised in that**:
the control server is adapted to create a quality of service, QoS, session, over which content is delivered to an end user, by requesting a resource reservation from the resource allocation server, and the resource allocation server is arranged to create the QoS session and to assign the QoS session an authentication token,
the resource allocation server is arranged to return the authentication token with a resource confirmation identifier, ID, to the control server, and the control server is arranged to pass the authentication token onto a service function (4), selected to manage network resources, the service function comprising a CoD, Content on Demand, server, a control server, or an application server,
wherein, having received the authentication token, the service function is arranged to return the authentication token to the resource allocation server, which is arranged to validate the association between a QoS session identifier, ID, and the authentication token and to authorise the service function to perform a request on that QoS session, and
the resource allocation server is arranged to maintain an association between the QoS session ID and the corresponding authentication token for the duration of the QoS session, the authentication token being used to authenticate management access to the session including instigation of resources.

2. A network as claimed in Claim 1, wherein the contol server is arranged to request an authentication token only when distributed management is requested.

3. A network as claimed in Claim 1 or 2, wherein the QoS session ID is passed onto the service function with the authentication token.

4. A method of managing resources on a network comprising a control server (2) and a resource allocation server (3), **characterised in that**:
the control server creates a quality of service, QoS, session, over which content is delivered to an end user, by submitting a request to the resource allocation server for resource reservation; the resource allocation server, in response to the request, creating a QoS session and assigning the QoS session an authentication token,
the resource allocation server passes the authentication token with a resource confirmation identifier, ID, to a service function (4) via the control server, the service function being selected to manage network resources, the service function comprising CoD, Content on Demand, server, a further control server, or an application server,
the service function returns the authentication token to the resource allocation server which validates the association between a QoS session identifier, ID, and the authentication token and authorises the service function to perform a request on that QoS session, and
the resource allocation server maintains an association between the QoS session ID and the corresponding authentication token for the duration of the QoS session, the authentication token being used to authenticate management access to the session, including instigation of resources.

5. A method as claimed in Claim 4, wherein an authentication token is only assigned when distributed management is requested.

6. A method as claimed in Claim 4 or 5, wherein the QoS session ID is passed onto the service function with the authentication token.

## Patentansprüche

1. Ein Datennetzwerk, umfassend einen Steuerungsserver (2) und einen Ressourcenzuteilungsserver (3), welcher für die Verwaltung von Netzwerkressourcen ausgelegt ist, **dadurch gekennzeichnet, dass**:
Der Steuerungsserver dazu ausgelegt ist, durch Anfordern einer Ressourcenreservierung von dem Ressourcenzuteilungsserver eine Dienstgüte-, QoS-Sitzung aufzubauen, über welche ein Inhalt an einen Endbenutzer geliefert wird, und der Ressourcenzuteilungsserver dazu ausgelegt ist, die QoS-Sitzung aufzubauen und der QoS-Sitzung ein Authentisierungstoken zuzuordnen,
der Ressourcenzuteilungsserver dazu ausgelegt ist, das Authentisierungstoken mit einer Ressourcenbestätigungskennung, ID, an den Steuerungsserver zurückzusenden, und der Steuerungsserver dazu ausgelegt ist, das Authentisierungstoken an eine Dienstfunktion (4) weiterzuleiten, welche für die Verwaltung der Netzwerkressourcen ausgewählt wird, wobei die Dienstfunktion einen CoD-Server für einen auf Abruf bereitgestellten Inhalt, einen Steuerungsserver oder einen Anwendungsserver umfasst,
wobei die Dienstfunktion nach Empfang des Authentisierungstokens dazu ausgelegt ist, das Authentisierungstoken an den Ressourcenzuteilungsserver zurückzusenden, wobei der Ressourcenzuteilungsserver dazu ausgelegt ist, die Assoziation zwischen einer QoS-Sitzungskennung, ID, und dem Authentisierungstoken zu validieren und die Dienstfunktion zu berechtigen, eine Anforderung auf dieser QoS-Sitzung durchzuführen, und
wobei der Ressourcenzuteilungsserver dazu ausgelegt ist, eine Assoziation zwischen der QoS-Sitzungskennung ID und dem entsprechenden Authentisierungstoken für die Dauer der QoS-Sitzung zu erhalten, wobei das Authentisierungstoken dazu benutzt wird, den Verwaltungszugang zu der Sitzung einschließlich der Veranlassung von Ressourcen zu authentifizieren.

2. Ein Netzwerk nach Anspruch 1, wobei der Steuerungsserver dazu ausgelegt ist, ein Authentisierungstoken nur dann anzufordern, wenn eine verteilte Verwaltung gefordert ist.

3. Ein Netzwerk nach Anspruch 1 oder 2, wobei die QoS-Sitzungs-ID mit dem Authentisierungstoken an die Dienstfunktion weitergeleitet wird.

4. Ein Verfahren zur Verwaltung von Ressourcen auf einem Netzwerk, welches einen Steuerungsserver (2) und einen Ressourcenzuteilungsserver (3) umfasst, **dadurch gekennzeichnet, dass**:
Der Steuerungsserver durch Zustellen einer Anforderung für eine Ressourcenreservierung an den Ressourcenzuteilungsserver eine Dienstgüte-, QoS-Sitzung, über welche ein Inhalt an einen Endbenutzer geliefert wird, aufbaut; wobei der Ressourcenzuteilungsserver in Antwort auf die Anforderung eine QoS-Sitzung aufbaut und der QoS-Sitzung ein Authentisierungstoken zuordnet,
der Ressourcenzuteilungsserver das Authentisierungstoken mit einer Ressourcenbestätigungskennung, ID, über den Steuerungsserver an eine Dienstfunktion (4) weiterleitet, wobei die Dienstfunktion ausgewählt wird, um Netzwerkressourcen zu verwalten, wobei die Dienstfunktion einen CoD-Server für einen auf Abruf bereitgestellten Inhalt, einen weiteren Steuerungsserver oder einen Anwendungsserver umfasst,
wobei die Dienstfunktion das Authentisierungstoken an den Ressourcenzuteilungsserver zurücksendet, welcher die Assoziation zwischen einer QoS-Sitzungskennung, ID, und dem Authentisierungstoken validiert und die Dienstfunktion berechtigt, eine Anforderung auf dieser QoS-Sitzung durchzuführen, und
wobei der Ressourcenzuteilungsserver eine Assoziation zwischen der QoS-Sitzungskennung ID und dem entsprechenden Authentisierungstoken für die Dauer der QoS-Sitzung erhält, wobei das Authentisierungstoken dazu benutzt wird, den Verwaltungszugang zu der Sitzung einschließlich der Veranlassung von Ressourcen zu authentifizieren.

5. Ein Verfahren nach Anspruch 4, wobei ein Authentisierungstoken nur dann zugeordnet wird, wenn eine verteilte Verwaltung gefordert ist.

6. Ein Verfahren nach Anspruch 4 oder 5, wobei die QoS-Sitzungs-ID mit dem Authentisierungstoken an die Dienstfunktion weitergeleitet wird.

## Revendications

1. Réseau de données, comprenant un serveur de commande (2) et un serveur d'allocation de ressources (3), qui est agencé pour gérer des ressources de réseau, **caractérisé en ce que** :
le serveur de commande est adapté pour créer une session de qualité de service, QoS, au cours de laquelle un contenu est distribué à un utilisateur final, en demandant une réservation de ressources au serveur d'allocation de ressources, et le serveur d'allocation de ressources est agencé pour créer la session QoS et pour attribuer à la session QoS un jeton d'authentification,
le serveur d'allocation de ressources est agencé pour renvoyer au serveur de commande le jeton d'authentification avec un identifiant de confirmation de ressources, ID, et le serveur de commande est agencé pour transporter le jeton d'authentification sur une fonction de service (4), sélectionnée pour gérer les ressources de réseau, la fonction de service comprenant un serveur CoD, Contenu à la Demande, un serveur de commande ou un serveur d'application,
dans lequel la fonction de service, ayant reçu le jeton d'authentification, est agencée pour renvoyer au serveur d'allocation de ressources le jeton d'authentification, qui est agencé pour valider l'association entre un identifiant de session QoS, ID, et le jeton d'authentification et pour autoriser la fonction de service à effectuer une demande sur cette session QoS, et
le serveur d'allocation de ressources est agencé pour maintenir une association entre l'identifiant de session QoS et le jeton d'authentification correspondant pendant la durée de la session QoS, le jeton d'authentification étant utilisé pour authentifier l'accès de gestion à la session comprenant l'instigation de ressources.

2. Réseau selon la revendication 1, dans lequel le serveur de commande est agencé pour demander un jeton d'authentification uniquement lorsqu'une gestion répartie est demandée.

3. Réseau selon la revendication 1 ou 2, dans lequel l'identifiant de session QoS est transmis à la fonction de service avec le jeton d'authentification.

4. Procédé de gestion des ressources sur un réseau comprenant un serveur de commande (2) et un serveur d'allocation de ressources (3), **caractérisé en ce que** :
le serveur de commande crée une session de qualité de service, QoS, au cours de laquelle un contenu est distribué à un utilisateur final, en soumettant une demande de réservation de ressources au serveur d'allocation de ressources ; le serveur d'allocation de ressources, en réponse à la demande, créant une session QoS et attribuant à la session QoS un jeton d'authentification,
le serveur d'allocation de ressources transmet le jeton d'authentification avec un identifiant de confirmation de ressources, ID, à une fonction de service via le serveur de commande, la fonction de service étant sélectionnée pour gérer les ressources de réseau, la fonction de service comprenant un serveur CoD, Contenu à la Demande, et un serveur de commande supplémentaire ou un serveur d'application.
la fonction de service renvoie le jeton d'authentification au serveur d'allocation de ressources qui valide l'association entre un identifiant de session QoS, ID, et le jeton d'authentification et autorise la fonction de service à effectuer une demande sur cette session QoS, et
le serveur d'allocation de ressources maintient une association entre l'identifiant de session QoS et le jeton d'authentification correspondant pendant la durée de la session QoS, le jeton d'authentification étant utilisé pour authentifier l'accès de gestion à la session comprenant l'instigation de ressources.

5. Procédé selon la revendication 4, dans lequel un jeton d'authentification est uniquement attribué lorsqu'une gestion répartie est demandée.

6. Procédé selon la revendication 4 ou 5, dans lequel l'identifiant de session QoS est transmis à la fonction de service avec le jeton d'authentification.
